# EUROPÄISCHE PATENTSCHRIFT

(11) **EP 1 342 221 B1**
(45) Veröffentlichungstag und Bekanntmachung des Hinweises auf die Patenterteilung: **22.06.2005**
(21) Anmeldenummer: 01995541.8
(22) Anmeldetag: 27.11.2001
(51) Int. Cl.: G08G 1/0967, G01C 21/34

(54) **VERFAHREN ZUM AUTOMATISCHEN LÖSCHEN EINER VERKEHRSMELDUNG**
METHOD FOR AUTOMATICALLY DELETING A TRAFFIC ANNOUNCEMENT
PROCEDE PERMETTANT D'EFFACER AUTOMATIQUEMENT UNE SIGNALISATION DE TRAFIC

(30) Priorität: 08.12.2000 DE 10061044
(43) Veröffentlichungstag der Anmeldung: 10.09.2003
(73) Patentinhaber: ROBERT BOSCH GMBH, 70442 Stuttgart (DE)
(72) Erfinder: FABIAN, Thomas, 31139 Hildesheim (DE); KREFT, Peter, 30966 Hemmingen (DE)
(86) Internationale Anmeldenummer: PCT/DE2001/004466
(87) Internationale Veröffentlichungsnummer: WO 2002/047050

(56) Entgegenhaltungen:
- WO-A-00/02010
- WO-A-93/18495
- US-A- 5 933 094

## Beschreibung

### Technisches Gebiet

Die vorliegende Erfindung betrifft ein Verfahren zum automatischen Löschen einer mindestens einer gerichteten Kante und/oder mindestens einem Knoten zugeordneten Verkehrsmeldung,
- wobei ein Routennetz, insbesondere ein Straßennetz, als gerichtete Kanten und zwischen den gerichteten Kanten angeordnete Knoten in einer Speichereinheit abgebildet wird,
- wobei jeder Kante und/oder jedem Knoten ein bestimmter Widerstand dergestalt zugeordnet wird,
   -- daß der Widerstand einer von der Verkehrsmeldung betroffenen Kante und/oder der Widerstand eines von der Verkehrsmeldung betroffenen Knotens erhöht wird oder
   -- daß eine von der Verkehrsmeldung betroffene Kante und/oder ein von der Verkehrsmeldung betroffener Knoten gesperrt wird (unendlich großer Widerstand),
- wobei die Route als eine Reihe von Kanten derart bestimmt wird, daß die Summe aller Widerstände minimal wird.

### Stand der Technik

Allgemein kann ein Routennetz, insbesondere ein Straßennetz, für die mathematische Bearbeitung durch einen Routensuchalgorithmus als Graph mit Kanten und mit Knoten dargestellt werden. Hierbei repräsentieren die Kanten die Straßen und die Knoten die Vermaschungspunkte des Straßennetzes.

Den Kanten und/oder den Knoten sind sogenannte (Fahr-)Widerstände zuordbar, die sich beispielsweise in Form einer Fahrstrecke oder in Form einer Fahrzeit widerspiegeln. Sind in diesem Zusammenhang den Kanten Widerstände, nämlich die sogenannten Kantenwiderstände oder Streckenwiderstände, zugeordnet, so stellt der Kantenwiderstand oder Streckenwiderstand eine Meßgröße für den Aufwand dar, von einem Knoten im Straßennetz zu einem anderen Knoten im Straßennetz zu gelangen. Wenn ergänzend oder alternativ hierzu den Knoten Widerstände, nämlich die sogenannten Knotenwiderstände, zugeordnet sind, wird im Knoten für jede denkbare Kombination einer ankommenden Kante mit einer abgehenden Kante ein Widerstand, eben der sogenannte Knotenwiderstand, beschrieben.

Hierbei kann im einfachsten Fall als Streckenwiderstand direkt die Kantenlänge verwendet werden. Alternativ kann aber auch die Fahrzeit auf einer Kante als Streckenwiderstand zugrunde gelegt werden, oder aber der Streckenwiderstand bestimmt sich durch eine Funktion, in die die Fahrzeit, die Streckenlänge und/oder andere Größen gewichtet eingehen.

Sämtliche konventionellen sogenannten Bestwege-Algorithmen bestimmen letztlich eine Route zwischen einer Startkante und einer Zielkante im gerichteten Graphen mit der Eigenschaft, daß die Summe aller den Kanten und/oder den Knoten zugeordneten Widerstände ein Minimum aufweist.

Hierbei wird die Route durch eine Folge von Kanten beschrieben, wobei zu jeder Kante die verbleibende Fahrzeit, die verbleibende Routenlänge und der verbleibende Widerstand zum Zielpunkt angegeben werden (dies bedeutet mit anderen Worten: wird als Streckenwiderstand die Kantenlänge gewählt, so wird nach der kürzesten Route im Graphen gesucht).

Aufbauend auf diesem beispielsweise aus der Druckschrift EP 0 979 987 A2 bekannten Verfahren zum Bestimmen einer Route von einem Ausgangspunkt zu einem Zielpunkt auf einem Routennetz, insbesondere auf einem Straßennetz, sind Navigationssysteme gegenwärtig in der Lage, die Zielführung eines Fortbewegungsmittels, insbesondere eines Kraftfahrzeugs, dahingehend zu dynamisieren, daß durch ein verkehrsbezogenes Ereignis, wie etwa durch eine Sperrung, durch einen Stau bzw. stockenden Verkehr und/oder durch einen Verkehrsunfall veranlaßte Verkehrsmeldungen, die auf der Route zum Ziel liegen, erkannt werden und daß das Navigationssystem automatisch eine Umleitungsalternative zur ursprünglichen, das heißt vor Berücksichtigung der Verkehrsmeldung definierten Route berechnet.

In diesem Zusammenhang werden Verkehrsmeldungen im Graphen durch eine Erhöhung des Streckenwiderstands der betroffenen Kanten abgebildet; alternativ oder ergänzend hierzu ist auch eine Abbildung der Widerstandserhöhung in den Knoten denkbar. Neben der Erhöhung der Streckenwiderstände und/oder der Knotenwiderstände ist grundsätzlich auch ein "Meiden" oder ein "Verbieten" bestimmter, von einer Verkehrsmeldung betroffener Kanten und/oder bestimmter, von einer Verkehrsmeldung betroffener Knoten realisierbar; ein derartiges "Verbot" wird algorithmisch dergestalt umgesetzt, daß dieses Verbot einem Nichtvorhandensein der entsprechenden Kante und/oder des entsprechenden Knotens gleichkommt, was dem Zuordnen eines unendlich großen Streckenwiderstands für die betroffene Kante und/oder eines unendlich großen Knotenwiderstands für den betroffenen Knoten gleichzusetzen ist.

Hierbei kommen als Bereitsteller oder Lieferanten für derartige Verkehrsmeldungen zum einen externe Quellen in Frage, wie beispielsweise Rundfunksender, die Verkehrsmeldungen über ihre TMC-Sender (TMC = Traffic Message Channel = Kanal für Verkehrsdurchsagen = Verkehrsfunkkanal mit automatisierter Erfassung der Verkehrslage und Aufbereitung entsprechender Verkehrsmeldungen) im RDS/TMC-Standard (RDS = Radio Data System = Radio-Daten-System) kodiert übertragen, oder Serviceprovider, die Verkehrsmeldungen mit Hilfe des SMS-Dienstes (SMS = Short Message Service) des GSM-Netzes (GSM = Global System for Mobile Communication) übertragen.

Bei derartigen Verkehrsmeldungen aus externen Quellen erfolgt nun die Löschung entweder durch separate Löschmeldungen der Rundfunksender, oder die Verkehrsmeldung wird vom Sender gleich bei der Übertragung an das Navigationssystem mit einer Gültigkeitsdauer versehen, oder das Navigationssystem versieht die Verkehrsmeldung mit einer eigenen Gültigkeitsdauer; in jedem Falle wird beim Löschen von Verkehrsmeldungen aus externen Quellen stets eine Neuberechnung der Route erforderlich, so daß das Navigationssystem überprüfen kann, ob sich der Routenverlauf durch den Entfall einer Sperrung wieder ändern könnte.

Zum anderen kommt als interne Quelle die Fahrerin oder der Fahrer (nachfolgend: der Fahrer) selbst in Betracht, indem er über ein MMI (= Man-Machine Interface = Mensch-Maschinen-Schnittstelle) manuell ein verkehrsbezogenes Ereignis, wie etwa eine Sperrung, einen Stau bzw. stockenden Verkehr und/oder einen Verkehrsunfall, auf einem Abschnitt oder auf mehreren Abschnitten der Route definiert und dann vom Navigationssystem eine Umleitungsalternative, das heißt eine neue, die manuelle Sperrung umgehende Route ermitteln läßt. Hat der Fahrer das Ziel erreicht, so kann die manuelle Sperrung vom Navigationssystem automatisch gelöscht werden.

Auch kann der Fahrer über ein geeignetes Kommando im MMI jederzeit selbst die Löschung der manuellen Sperrung auslösen. Nach dieser vom Fahrer initiierten Löschung von Sperrungen muß jedoch vom Navigationssystem stets eine Neuberechnung der Route durchgeführt werden, damit das Navigationssystem überprüfen kann, ob sich der Routenverlauf durch den Entfall einer Sperrung wieder ändern könnte.

Daß nun im Kriterium für das automatische Löschen von Verkehrsmeldungen eine besondere Problematik liegt, kann daran veranschaulicht werden, daß bei einem zu frühen Löschen der Verkehrsmeldung die Route unerwünschterweise wieder auf den zu meidenden Verkehrsabschnitt zurückklappt und der Fahrer somit wieder durch den Anlaß für die Verkehrsmeldung, das heißt durch die Sperrung, durch den Stau bzw. stockenden Verkehr und/oder durch den Verkehrsunfall geführt wird (beispielsweise definiert der Fahrer bei Vorliegen einer Route einen Abschnitt derselben und sperrt diesen Abschnitt manuell; das Navigationssystem ermittelt eine neue, die manuelle Sperrung des Fahrers umgehende Alternativroute, der der Fahrer folgt; wird nun die Sperrung zu früh vom Navigationssystem gelöscht, so führt die neue Route ungewollterweise wieder durch den gesperrten Abschnitt der ursprünglich gewählten Route).

Löscht das Navigationssystem die Verkehrsmeldungen hingegen zu spät (im Extremfall, wie vorstehend gemäß dem Stand der Technik beschrieben, erst bei Erreichen des Zielpunkts), so bleiben wertvolle Speicherressourcen im Navigationssystem zulange mit wertlosen, nicht mehr für den weiteren Verlauf der Route maßgeblichen Verkehrsmeldungen belegt (man stelle sich beispielsweise eine Route von Hamburg nach München vor, wobei der Fahrer in Hamburg, um eine lokale Baustelle in der Innenstadt von Hamburg zu umfahren, eine Sperrung auf diesem Abschnitt der Route definiert, diese Sperrung jedoch erst mehrere Stunden später bei Erreichen des Zielpunkts in München vom Navigationssystem gelöscht wird; wird dem Fahrer beispielsweise die Löschung der einzelnen Sperrungen in einer Liste angeboten oder einfach eine Liste der aktuellen Sperrungen dargestellt, so ist eine Sperrung in Hamburg eher verwirrend, wenn sich der Fahrer bereits in München befindet).

Wird dem Fahrer die Aufgabe überlassen, überflüssige, weil nicht mehr für den Routenverlauf maßgebende Verkehrsmeldungen zu löschen, so ist dies nicht der Verkehrssicherheit dienlich, denn der Fahrer muß sich hierzu auf das Navigationssystem konzentrieren. Darüber hinaus muß vom Navigationssystem stets eine Neuberechnung der Route durchgeführt werden, wobei der Fahrer während dieser Zeit der Neuberechnung ohne Zielführungshinweise ist.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, ein Verfahren der eingangs genannten Art so weiterzubilden, daß Verkehrsmeldungen durch ein Navigationssystem zum frühestmöglichen Zeitpunkt automatisch gelöscht werden; hierbei soll durch die vorliegende Erfindung jedoch sichergestellt werden, daß nicht wieder durch den von der Verkehrsmeldung betroffenen Routenabschnitt geführt wird.

Diese Aufgabe wird gemäß der Lehre der vorliegenden Erfindung durch ein Verfahren mit den im Anspruch 1 genannten Merkmalen gelöst. Vorteilhafte Ausgestaltungen und zweckmäßige Weiterbildungen des vorliegenden Verfahrens sind in den Unteransprüchen gekennzeichnet.

Mithin ist der Kern der vorliegenden Erfindung in dem Kriterium zu sehen, das das Navigationssystem für das automatische Löschen von Verkehrsmeldungen auswertet. Beim vorliegenden Verfahren wird eine Verkehrsmeldung genau dann vom Navigationssystem gelöscht, wenn der Routenrestwiderstand von der aktuellen Position des Fortbewegungsmittels zum Ziel erstmals kleiner oder gleich dem Restwiderstand zum Ziel wird, den die der Verkehrsmeldung in Zielrichtung nachfolgende Kante auf der Route zum Zeitpunkt vor der widerstandsmäßigen Berücksichtigung der Verkehrsmeldung hatte.

Gemäß einem erfindungswesentlichen Kriterium funktioniert das vorliegende Verfahren unabhängig davon, ob Streckenwiderstände (→ jeder Kante ist ein bestimmter Widerstand, eben der sogenannte Streckenwiderstand, zugeordnet) oder ob Knotenwiderstände (→ jedem Knoten ist ein bestimmter Widerstand, eben der sogenannte Knotenwiderstand, zugeordnet) oder ob sowohl Streckenwiderstände als auch Knotenwiderstände abgebildet werden (aus diesem Grunde umfaßt der vorstehend und nachfolgend verwendete Begriff "Widerstand" sowohl die Streckenwiderstände als auch die Knotenwiderstände).

Der Fachmann auf dem Gebiet der Verkehrstelematik wird in bezug auf die vorliegende Erfindung insbesondere zu schätzen wissen, daß die verbleibenden Sperrungen, deren zugehörige Verkehrsmeldungen noch nicht erfindungsgemäß gelöscht sind, diejenigen Sperrungen darstellen, die aktuell (noch) umfahren werden oder aktuell (noch) zu umfahren sind. Hierdurch kann dem berechtigten Bedürfnis Rechnung getragen werden, diejenigen Sperrungen etwa in einer Karte auf dem Display des Navigationssystems zu markieren, die aktuell (noch) gemieden werden.

Mithin bietet das Verfahren gemäß der vorliegenden Erfindung die Möglichkeit, die noch nicht gelöschten Verkehrsmeldungen zu kennzeichnen oder zu markieren, die ursprünglich Bestandteil der gewählten Route waren, dann jedoch durch die alternativ gewählte Route umfahren werden und hierbei noch nicht vollständig umfahren sind. Die Kennzeichnung oder Markierung kann
- in Form mindestens einer Liste und/oder
- in Form mindestens einer Karte, etwa eines Routennetzes, insbesondere eines Straßennetzes,
erfolgen, beispielsweise mittels Darstellung der relevanten Verkehrsmeldungen durch entsprechende Kennzeichnung oder Markierung in einer Kartendarstellung auf mindestens einer Anzeigeeinrichtung oder auf mindestens einem Display.

Durch das Verfahren gemäß der vorliegenden Erfindung ist zudem ausgeschlossen, daß den Sperrungen zugeordnete Verkehrsmeldungen zu früh gelöscht werden und daß die Route auf diese Weise wieder in die ehedem definierte Sperrung hineinführt. Ebenso ist sichergestellt, daß das Löschen der Sperrung in der Speichereinheit des Navigationssystems zu einem Zeitpunkt erfolgt, zu dem keine Beeinflussung der aktuellen Route mehr möglich ist; hierdurch erübrigt sich die Prüfung einer Beeinflussung der aktuellen Route durch eine Neuberechnung der Route, wie sie konventionellerweise bei einer manuellen Löschung der der Sperrung zugeordneten Verkehrsmeldung erforderlich wäre.

Die vorliegende Erfindung betrifft des weiteren die Verwendung des vorstehend dargelegten Verfahrens in einem Fortbewegungsmittel, insbesondere in einem Navigationssystem eines Fortbewegungsmittels.

Alternativ oder in Ergänzung hierzu kann das vorstehend dargelegte Verfahren auch in einer insbesondere softwarebasierten Routensuch-Applikation einer elektronischen Datenverarbeitungsanlage, insbesondere eines Personal Computers (PC) als PC-Tool, zum Einsatz gelangen; hierdurch wird der Anwender der elektronischen Datenverarbeitungsanlage in die Lage versetzt, vor Fahrtantritt die avisierte Route auf mindestens ein verkehrsbezogenes Ereignis, wie etwa auf mindestens eine Sperrung, auf mindestens einen Stau bzw. stockenden Verkehr und/oder auf mindestens einen Verkehrsunfall, zu überprüfen; im Bedarfsfalle kann sich der Anwender der elektronischen Datenverarbeitungsanlage dann eine Alternativ- oder Ausweichroute bestimmen und anzeigen lassen.

Auch ist eine Verwendung des vorstehend dargelegten Verfahrens dahingehend möglich, daß ein Serviceprovider eine zweckmäßigerweise optimierte Route auf Anfrage eines Anwenders unter Berücksichtigung von mindestens einer gerichteten Kante und/oder mindestens einem Knoten zugeordneten Verkehrsmeldungen mittels einer elektronischen Datenverarbeitungsanlage berechnet und die dergestalt ermittelte Route per Datenfernübertragung in das Fortbewegungsmittel, insbesondere in das Kraftfahrzeug, des Anwenders übermittelt.

Die vorliegende Erfindung betrifft schließlich ein Navigationssystem für ein Fortbewegungsmittel, insbesondere für ein Kraftfahrzeug, aufweisend
- mindestens eine Speichereinheit zum Abbilden eines Routennetzes, insbesondere eines Straßennetzes, als gerichtete Kanten und zwischen den gerichteten Kanten angeordnete Knoten und
- mindestens eine Recheneinheit zum Durchführen des vorstehend dargelegten Verfahrens.

Gemäß einer erfinderischen Weiterbildung des vorliegenden Navigationssystems kann dieses mindestens eine Anzeigeeinrichtung oder mindestens ein Display zum Darstellen des verkehrsbezogenen Ereignisses und/oder der dem verkehrsbezogenen Ereignis zugeordneten Verkehrsmeldung aufweisen.

### Kurze Beschreibung der Zeichnungen

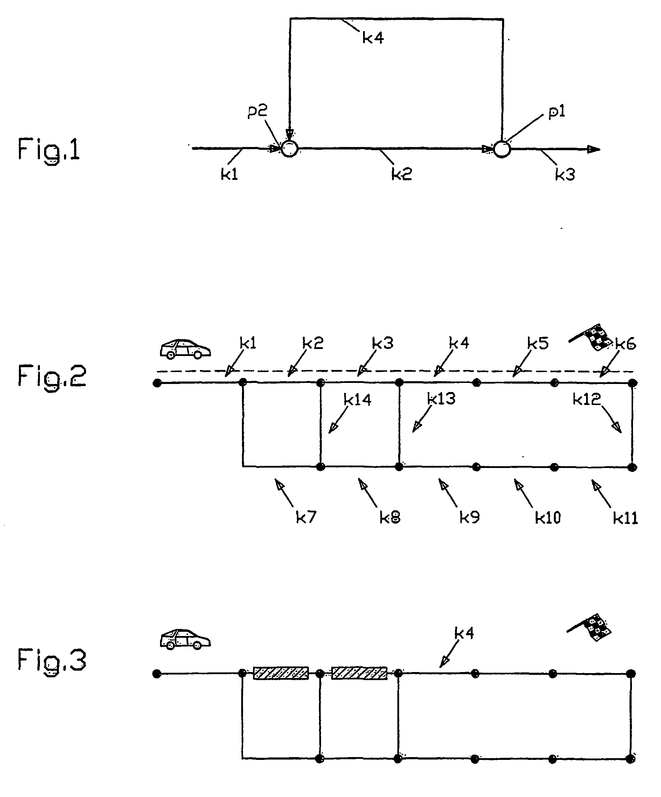

Weitere Ausgestaltungen, Merkmale und Vorteile der vorliegenden Erfindung werden nachstehend anhand des durch die Figuren 1 bis 7 veranschaulichten Ausführungsbeispiels näher erläutert.

Es zeigt:
- Fig. 1 bis 7: jeweilige Abbildungen eines Routennetzes, insbesondere eines realen Straßennetzes, als ein Netzwerk von gerichteten Kanten und von zwischen den gerichteten Kanten angeordneten Knoten.

Gleiche oder ähnliche Ausgestaltungen, Elemente oder Merkmale sind in den Figuren 1 bis 7 mit identischen Bezugszeichen versehen.

### Bester Weg zur Ausführung der Erfindung

Die nachfolgenden Erläuterungen zum vorliegenden Verfahren, durch das eine mindestens einer gerichteten Kante k und/oder mindestens einem Knoten p zugeordnete Verkehrsmeldung automatisch gelöscht wird, sollen durch die Figuren 1 bis 7 illustrativ unterstützt werden, wobei von der vorstehend erläuterten Situation einer Abbildung eines Routennetzes, insbesondere eines realen Straßennetzes, als ein Netzwerk von gerichteten Kanten k und von zwischen den gerichteten Kanten k angeordneten Knoten p, die als Vermaschungspunkte fungieren, in einer Speichereinheit ausgegangen und die vorstehende Terminologie übernommen wird; im speziellen wird die Route als eine Reihe von Kanten k derart bestimmt, daß die Summe aller Streckenwiderstände minimal wird (vgl. das Beispielnetzwerk gemäß Figur 1, das die Kanten k1, k2, k3 und k4 sowie die Knoten p1 und p2 aufweist, wobei der Knoten p1 als Vermaschungspunkt der Kanten k2, k3 und k4 fungiert und wobei der Knoten p2 als Vermaschungspunkt der Kanten k1, k2 und k4 fungiert).

Im Ausführungsbeispiel bewegt sich ein Fortbewegungsmittel in Form eines Kraftfahrzeugs gemäß Figur 2 von einem durch die Kante k1 symbolisierten Start auf ein durch die Kante k6 symbolisiertes Ziel zu. Hierbei ergibt sich auf dem ursprünglich geplanten Routenverlauf k1 (= Start) → k2 → k3 → k4 → k5 → k6 (= Ziel) der jeweilige durch die Restlänge zum Ziel definierte Restwiderstand zum Ziel gemäß Tabelle 1:

| Kante | Restlänge zum Ziel | Restwiderstand zum Ziel |
|---|---|---|
| k1 (= Start) | 500 Meter | 500 |
| k2 | 400 Meter | 400 |
| k3 | 300 Meter | 300 |
| k4 | 200 Meter | 200 |
| k5 | 100 Meter | 100 |
| k6 (= Ziel) | 0 Meter | 0 |

Wie aus Tabelle 1 mithin ersichtlich ist, ist jeder Kante k (von exemplarisch 100 Meter Länge) ein bestimmter, im Ausführungsbeispiel gleicher Streckenwiderstand (= 100) zugeordnet.

Wird nun auf den Kanten k2 und k3 der Route eine beispielsweise durch einen Verkehrsunfall veranlaßte Sperrung, der eine Verkehrsmeldung zugeordnet wird, definiert, so ist, bevor der Streckenwiderstand der Kanten k2 und k3 zur Sperrung dieser Abschnitte entsprechend erhöht wird, der Restwiderstand der der Sperrung in Zielrichtung folgenden sogenannten Referenzkante zum Ziel - im Ausführungsbeispiel der Restwiderstand der Referenzkante k4 (= 200) - für die nachfolgende Prüfung der Löschungsbedingung als sogenannter Referenzwiderstand zwischenzuspeichern.

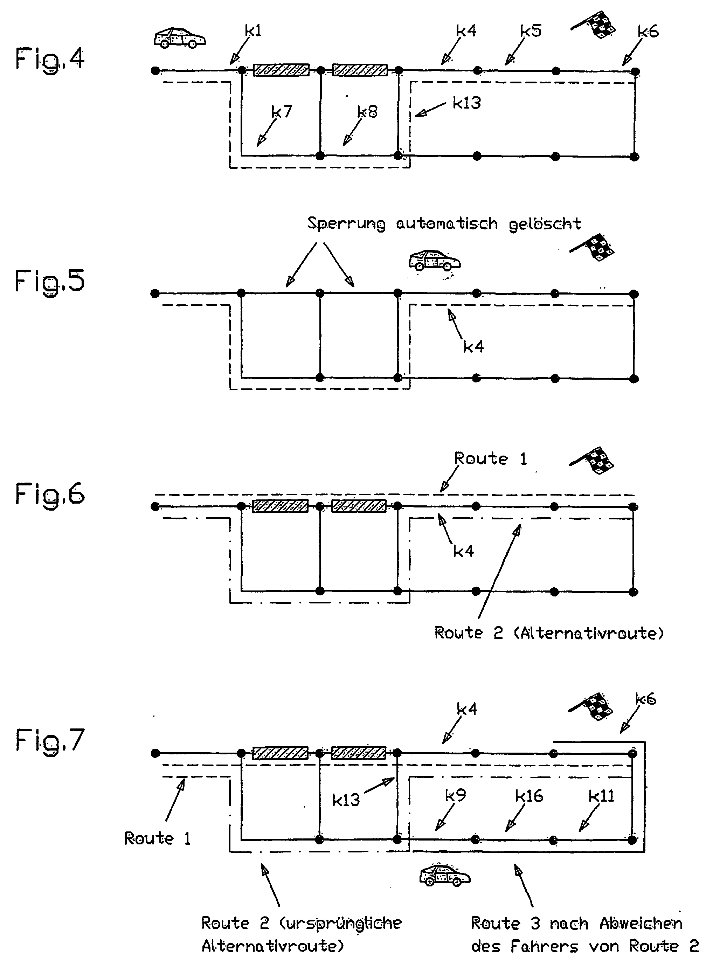

Nun wird die Sperrung der Kanten k2 und k3 gemäß Figur 3 aktiviert und die Route, das heißt insbesondere die Summe der verbleibenden Widerstände zwischen der aktuellen Position und dem Ziel in einer Recheneinheit des Navigationssystems neuberechnet, woraus der zum ursprünglich geplanten Routenverlauf k1 (= Start) → k2 → k3 → k4 → k5 → k6 (= Ziel) alternative Routenverlauf k1 (= Start) → k7 → k8 → k13 → k4 → k5 → k6 (= Ziel) gemäß Figur 4 resultiert, dessen jeweiliger, durch die Restlänge zum Ziel definierter Restwiderstand zum Ziel aus Tabelle 2 hervorgeht:

| Kante | Restlänge zum Ziel | Restwiderstand zum Ziel |
|---|---|---|
| k1 (= Start) | 700 Meter | 700 |
| k7 | 600 Meter | 600 |
| k8 | 400 Meter | 400 |
| k13 | 300 Meter | 300 |
| k4 | 200 Meter | 200 |
| k5 | 100 Meter | 100 |
| k6 (= Ziel) | 0 Meter | 0 |

Wird nun - in Übereinstimmung mit dem Widerstandsvergleichskriterium gemäß der Lehre der vorliegenden Erfindung - beim Befahren des alternativen Routenverlaufs die Summe der verbleibenden Widerstände zwischen der aktuellen. Position und dem Ziel, das heißt der Restwiderstand zum Ziel - beispielsweise beim kontinuierlichen Vergleichen mittels der Recheneinheit des Navigationssystems - erstmals kleiner oder gleich dem zuvor zwischengespeicherten Restwiderstand der Referenzkante k4 (= 200), so kann die der Sperrung der Kanten k2 und k3 entsprechende Verkehrsmeldung automatisch vom Navigationssystem, insbesondere aus dem Speicher des Navigationssystems, gelöscht werden, denn ab diesem Zeitpunkt des Unterschreitens kann ausgeschlossen werden, daß der alternative Routenverlauf noch durch den zu sperrenden Abschnitt führt (vgl. Figur 5).

In Anbetracht des Verfahrens gemäß der vorliegenden Erfindung könnte sich die Frage stellen, ob es nicht möglich ist, durch Vergleichen der Routenkanten vor der Berechnung des alternativen Routenverlaufs (= Route 1 gemäß Figur 6) mit den Routenkanten nach der Berechnung des alternativen Routenverlaufs (= Route 2 gemäß Figur 6) den gemeinsamen Routenverlauf nach Umfahren der Sperrung zu ermitteln und, sobald der gemeinsame Abschnitt hinter der Sperrung befahren wird, die der Sperrung zugeordnete Verkehrsmeldung zu löschen; dieses zunächst naheliegend erscheinende Vorgehen würde gemäß Figur 6 im Ausführungsbeispiel bei Befahren der Referenzkante k4 ebenfalls die der Sperrung zugeordnete Verkehrsmeldung löschen.

Es ergibt sich bei diesem Vorgehen jedoch insofern ein Nachteil, als davon auszugehen ist, daß der Fahrer des Kraftfahrzeugs etwa von der Route 2, das heißt vom alternativen Routenverlauf abweicht und/oder daß weitere Verkehrsmeldungen hinzukommen und die Route einen neuen Verlauf (= Route 3 gemäß Figur 7) nimmt, der keine Gemeinsamkeiten mit der Route 1 vor der Berechnung des alternativen Routenverlaufs, das heißt vor der Benachrichtigung hinsichtlich der Sperrung der Kanten k2 und k3 mittels der Verkehrsmeldung aufweist, wie dies aus Figur 7 hervorgeht.

Beachtlich ist nun, daß in Figur 7 die mit der Sperrung korrespondierende Verkehrsmeldung nicht so frühzeitig wie möglich gelöscht wird, denn die Route 1 gemäß Figur 7 und die Route 3 gemäß Figur 7 weisen keine gemeinsame Referenzkante k4 mehr auf. Wird nun aber das Widerstandsvergleichskriterium gemäß der vorliegenden Erfindung herangezogen, so wird die der Sperrung zugeordnete Verkehrsmeldung beim Befahren der Kante k11 (vgl. Figur 7) gelöscht, denn dann wird auf der Route 3 der Restwiderstand zum Ziel erstmals kleiner oder gleich dem zuvor zwischengespeicherten Restwiderstand der sogenannten Referenzkante k4 (= 200), wie sich aus Tabelle 3 ergibt:

| Kante | Restlänge zum Ziel | Restwiderstand zum Ziel |
|---|---|---|
| k9 | 400 Meter | 400 |
| k10 | 300 Meter | 300 |
| k11 | 200 Meter | 200 |
| k6 (= Ziel) | 0 Meter | 0 |

Abschließend ist in bezug auf das vorliegende Verfahren noch anzumerken, daß die Erfindung dann nachweisbar ist, wenn eingegebene Sperrungen durch den Fahrer erneut abrufbar sind. Dies kann beispielsweise durch eine Auflistung der aktivierten Sperrungen erfolgen, durch ein Angebot, die Sperrungen wieder zu löschen, oder durch eine Darstellung in einer Karte auf dem Display des Navigationssystems.

Mindestens eine dieser Funktionen wird typischerweise von allen Navigationssystemen angeboten, um die Routenwahl des Navigationssystems zumindest grob plausibilisierbar zu präsentieren oder um die Eingaben korrigierbar zu gestalten. Ist die Wiederabrufbarkeit gegeben, so kann ein vorhandenes Verfahren zum automatischen Löschen von Sperrungen durch Fahrversuche nachgewiesen werden.

## Patentansprüche

1. Verfahren zum automatischen Löschen einer mindestens einer gerichteten Kante (k) und/oder mindestens einem Knoten (p) zugeordneten Verkehrsmeldung,
- wobei ein Routennetz, insbesondere ein Straßennetz, als gerichtete Kanten (k) und zwischen den gerichteten Kanten (k) angeordnete Knoten (p) in einer Speichereinheit abgebildet wird,
- wobei jeder Kante (k) und/oder jedem Knoten (p) ein bestimmter Widerstand dergestalt zugeordnet wird,
-- daß der Widerstand einer von der Verkehrsmeldung betroffenen Kante (k) und/oder der Widerstand eines von der Verkehrsmeldung betroffenen Knotens (p) erhöht wird oder
-- daß eine von der Verkehrsmeldung betroffene Kante (k) und/oder ein von der Verkehrsmeldung betroffener Knoten (p) gesperrt wird, was einem Nichtvorhandensein bzw. einem unendlich großen Widerstand für die betroffene Kante und/oder den betroffenen Knoten gleichkommt,
- wobei die Route als eine Reihe von Kanten (k) derart bestimmt wird, daß die Summe aller Widerstände minimal wird,
**dadurch gekennzeichnet,**
**daß** die Verkehrsmeldung gelöscht wird, wenn die Summe der verbleibenden Widerstände zwischen der aktuellen Position und dem Ziel kleiner oder gleich einem Referenzwiderstand wird, der durch die Summe der verbleibenden Widerstände zwischen einer Referenzkante (k_{R}) und dem Ziel gegeben ist, wobei die Referenzkante (k_{R}) die dem von der Verkehrsmeldung betroffenen Abschnitt der vor Berücksichtigung der Verkehrsmeldung vorgegebenen Route in Zielrichtung nachfolgende Kante ist.

2. Verfahren gemäß Anspruch 1, **gekennzeichnet durch** die folgenden Schritte:
- Zwischenspeichern des Referenzwiderstands in der Speichereinheit;
- Neuberechnen der Summe der verbleibenden Widerstände zwischen der aktuellen Position und dem Ziel;
- Vergleichen der Summe der verbleibenden Widerstände zwischen der aktuellen Position und dem Ziel mit dem Referenzwiderstand; und
- Löschen der Verkehrsmeldung aus der Speichereinheit, wenn die Summe der verbleibenden Widerstände zwischen der aktuellen Position und dem Ziel den Referenzwiderstand unterschreitet.

3. Verfahren gemäß Anspruch 1 oder 2, **dadurch gekennzeichnet,**
- **daß** die Verkehrsmeldung mindestens einem verkehrsbezogenen Ereignis, wie mindestens einer Sperrung, mindestens einem Stau bzw. stockendem Verkehr und/oder mindestens einem Verkehrsunfall, zugeordnet wird und/oder
- **daß** die Verkehrsmeldung durch mindestens ein verkehrsbezogenes Ereignis, wie durch mindestens eine Sperrung, durch mindestens einen Stau bzw. stockenden Verkehr und/oder durch mindestens einen Verkehrsunfall, veranlaßt wird.

4. Verfahren gemäß Anspruch 3, **dadurch gekennzeichnet, daß** das mindestens eine verkehrsbezogene Ereignis, dessen zugeordnete Verkehrsmeldung noch nicht gelöscht ist und das insbesondere umfahren wird oder insbesondere noch zu umfahren ist, **gekennzeichnet** oder markiert wird.

5. Verfahren gemäß Anspruch 4, **dadurch gekennzeichnet, daß** das verkehrsbezogene Ereignis durch Darstellung der zugeordneten Verkehrsmeldung
- in Form mindestens einer Liste und/oder
- in Form mindestens einer Karte, etwa eines Routennetzes, insbesondere eines Straßennetzes, **gekennzeichnet** oder markiert wird.

6. Verfahren gemäß Anspruch 4 oder 5, **dadurch gekennzeichnet, daß** das verkehrsbezogene Ereignis und/oder die dem verkehrsbezogenen Ereignis zugeordnete Verkehrsmeldung auf mindestens einer Anzeigeeinrichtung oder auf mindestens einem Display dargestellt wird.

7. Verfahren gemäß mindestens einem der Ansprüche 1 bis 6, **dadurch gekennzeichnet, daß** die Verkehrsmeldung mittels Verkehrstelematik direkt, etwa mittels GPRS, General Packet Radio Service, und/oder mittels GSM, Global System for Mobile Communication, und/oder mittels UMTS, Universal Mobile Telecommunication System, oder von einem Serviceprovider online, in ein Navigationssystem eingespielt wird.

8. Verwendung des Verfahrens gemäß mindestens einem der Ansprüche 1 bis 7
- in einem Fortbewegungsmittel, insbesondere in einem Navigationssystem eines Fortbewegungsmittels, und/oder
- in einer insbesondere softwarebasierten Routensuch-Applikation einer elektronischen Datenverarbeitungsanlage, insbesondere eines Personal Computers (PC), und/oder
- in einer elektronischen Datenverarbeitungsanlage eines Serviceproviders.

9. Navigationssystem für ein Fortbewegungsmittel, insbesondere für ein Kraftfahrzeug, aufweisend
- mindestens eine Speichereinheit zum Abbilden eines Routennetzes, insbesondere eines Straßennetzes, als gerichtete Kanten (k) und zwischen den gerichteten Kanten (k) angeordnete Knoten (p) und jeder Kante (k) und/oder jedem Knoten (p) zugeordneten Widerständen,
- Mitteln zum Speichern von mindestens einer gerichteten Kante (k) und/oder mindestens einem Knoten (p) zugeordneten Verkehrsmeldungen und
- mindestens eine Recheneinheit zum Durchführen des Verfahrens gemäß mindestens einem der Ansprüche 1-7 umfassend
-- Mittel zur Bestimmung eines Referenzwiderstandes als Summe der Widerstände zwischen einer Referenzkante und dem Ziel, wobei die Referenzkante die dem von der Verkehrsmeldung betroffenen Abschnitt der vor Berücksichtigung der Verkehrsmeldung vorgegebenen Route in Zielrichtung nachfolgende Kante ist
-- Mittel zur Berechnung einer Summe verbleibender Widerstände zwischen aktueller Position und Ziel
-- Mittel zum Vergleichen dieser Summe mit dem Referenzwiderstand und
-- Mittel zum Löschen der Verkehrsmeldung für den Fall, dass die Summe kleiner oder gleich dem Referenzwiderstand ist.

10. Navigationssystem gemäß Anspruch 9, **gekennzeichnet durch** mindestens eine Anzeigeeinrichtung oder mindestens ein Display zum Darstellen des verkehrsbezogenen Ereignisses und/oder der dem verkehrsbezogenen Ereignis zugeordneten Verkehrsmeldung.

## Claims

1. Method for automatically deleting a traffic announcement which is associated with at least one directional edge (k) and/or with at least one node (p),
- where a route network, particularly a road network, is mapped in a memory unit as directional edges (k) and nodes (p) which are arranged between the directional edges (k),
- where each edge (k) and/or each node (p) is allocated a particular resistance such
-- that the resistance of an edge (k) which is affected by the traffic announcement and/or the resistance of a node (p) which is affected by the traffic announcement is increased or
-- that an edge (k) which is affected by the traffic announcement and/or a node (p) which is affected by the traffic announcement is closed, which is equal to an absence or to an infinitely high resistance for the affected edge and/or for the affected node,
- the route being determined as a series of edges (k) such that the sum of all resistances becomes minimal,
**characterized**
**in that** the traffic announcement is deleted if the sum of the remaining resistances between the current position and the destination becomes less than or equal to a reference resistance which is given by the sum of the remaining resistances between a reference edge (k_{R}) and the destination, the reference edge (k_{R}) being the edge which comes after that section of the route prescribed before the traffic announcement is taken into account which is affected by the traffic announcement in the direction of the destination.

2. Method according to Claim 1, **characterized by** the following steps:
- the reference resistance is buffer-stored in the memory unit;
- the sum of the remaining resistances between the current position and the destination is recalculated;
- the sum of the remaining resistances between the current position and the destination is compared with the reference resistance; and
- the traffic announcement is deleted from the memory unit if the sum of the remaining resistances between the current position and the destination is below the reference resistance.

3. Method according to Claim 1 or 2, **characterized**
- **in that** the traffic announcement is allocated to at least one traffic-related event, such as at least one closure, at least one queue or traffic hold-up and/or at least one traffic accident, and/or
- **in that** the traffic announcement is prompted by at least one traffic-related event, such as by at least one closure, by at least one queue or traffic-hold-up and/or by at least one traffic accident.

4. Method according to Claim 3, **characterized in that** the at least one traffic-related event whose associated traffic announcement has not yet been deleted and which is being bypassed, in particular, or is yet to be bypassed, in particular, is identified or marked.

5. Method according to Claim 4, **characterized in that** the traffic-related event is identified or marked by showing the associated traffic announcement
- in the form of at least one list and/or
- in the form of at least one map, for example of a route network, particularly of a road network.

6. Method according to Claim 4 or 5, **characterized in that** the traffic-related event and/or the traffic announcement associated with the traffic-related event is shown on at least one display device or on at least one display.

7. Method according to at least one of Claims 1 to 6, **characterized in that** the traffic announcement is loaded into a navigation system by means of traffic telematics directly, for example by means of GPRS, General Packet Radio Service, and/or by means of GSM, Global System for Mobile Communication, and/or by means of UMTS, Universal Mobile Telecommunication System, or by a service provider online.

8. Use of the method according to at least one of Claims 1 to 7
- in a means of locomotion, particularly in a navigation system on a means of locomotion, and/or
- in a software-based (in particular) route-searching application on an electronic data processing installation, particularly on a personal computer (PC), and/or
- in an electronic data processing installation belonging to a service provider.

9. Navigation system for a means of locomotion, particularly for a motor vehicle, having
- at least one memory unit for mapping a route network, particularly a road network, as directional edges (k) and nodes (p) which are arranged between the directional edges (k) and resistances which are associated with each edge (k) and/or with each node (p),
- means for storing traffic announcements which are associated with at least one directional edge (k) and/or with at least one node (p), and
- at least one processor for carrying out the method according to at least one of Claims 1-7, comprising,
-- means for determining a reference resistance as the sum of the resistances between a reference edge and the destination, the reference edge being the edge which comes after that section of the route prescribed before the traffic announcement is taken into account which is affected by the traffic announcement in the direction of the destination,
-- means for calculating a sum of remaining resistances between the current position and the destination,
-- means for comparing this sum with the reference resistance, and
-- means for deleting the traffic announcement if the sum is less than or equal to the reference resistance.

10. Navigation system according to Claim 9, **characterized by** at least one display device or at least one display for showing the traffic-related event and/or the traffic announcement which is associated with the traffic-related event.

## Revendications

1. Procédé permettant d'effacer automatiquement une information de trafic associée à au moins une bordure directive (k) et/ou à au moins un noeud (p) selon laquelle
- dans une unité d'enregistrement est formée l'image d'un réseau de routes, notamment un réseau de rues, sous la forme de bordures directives (k) et de noeuds (p) situés entre celles-ci,
- la résistance d'une bordure (k) concernée par l'information de trafic et/ou la résistance d'un noeud concerné par l'information de trafic est augmentée, ou bien
- une bordure (k) concernée par l'information de trafic et/ou un noeud (p) concerné par l'information de trafic est bloqué, ce qui équivaut à une absence ou à une résistance infiniment grande pour la bordure concernée et/ou le noeud concerné,
- la route constituée par une série de bordures (k) est définie de manière que la somme de toutes les résistances soit minimale,
**caractérisé en ce que**
l'information de trafic est effacée si la somme des résistances subsistant entre la position actuelle et le but est inférieure ou égale à une résistance de référence donnée par la somme des résistances subsistant entre une bordure de référence (k_{R}) et le but, cette bordure étant celle qui fait suite dans la direction du but à la section concernée par l'information de trafic de la route prédéfinie avant prise en compte de cette information.

2. Procédé selon la revendication 1,
**caractérisé par** les étapes suivantes :
- mémorisation intermédiaire de la résistance de référence dans l'unité d'enregistrement ;
- calcul à nouveau de la somme des résistances subsistant entre la position actuelle et le but ;
- comparaison de la somme des résistances subsistant entre la position actuelle et le but, à la résistance de référence ;
- effacement de l'information de trafic dans l'unité d'enregistrement, si la somme des résistances qui subsistent entre la position actuelle et le but, se trouve inférieure à la résistance de référence.

3. Procédé selon la revendication 1 ou 2,
**caractérisé en ce que**
- l'information de trafic est associée à au moins un événement concernant le trafic, comme au moins un blocage, au moins un bouchon, c'est-à-dire un trafic qui s'arrête, et/ou
- l'information de trafic est provoquée par au moins un événement concernant le trafic, comme au moins un blocage, au moins un bouchon c'est-à-dire un trafic qui s'arrête et/ou au moins un accident.

4. Procédé selon la revendication 3,
**caractérisé en ce que**
l'événement concernant le trafic, au nombre d'un au moins, et dont l'information de trafic qui lui est associée n'est pas encore effacée, et qui notamment est contourné ou notamment reste encore à contourner, est **caractérisé** ou marqué.

5. Procédé selon la revendication 4,
**caractérisé en ce que**
l'événement concernant le trafic est **caractérisé** et marqué par une présentation de l'information de trafic associée sous la forme d'au moins une liste et/ou sous la forme d'au moins une carte, par exemple d'un réseau de routes, notamment un réseau de rues.

6. Procédé selon la revendication 4 ou 5,
**caractérisé en ce que**
l'événement concernant le trafic et/ou l'information de trafic associée à cet événement est représenté sur au moins un dispositif indicateur ou sur au moins un écran.

7. Procédé selon au moins une des revendications 1 à 6,
**caractérisé en ce que**
l'information de trafic est introduite dans un système de navigation directement par une télématique de trafic, par exemple au moyen d'un GPRS (General Packet Radio Service) et/ou au moyen d'un GSM (Global System for Mobile Communication) et/ou au moyen d'un UMTS (Universal Mobile Telecommunication) ou par un fournisseur de service en ligne.

8. Utilisation du procédé selon au moins une des revendications 1 à 7,
- dans un moyen de déplacement, notamment dans un système de navigation d'un moyen de déplacement, et/ou
- dans une application de recherche de route, basée en particulier sur un software, d'une installation électronique de traitement de données, en particulier un ordinateur personnel (PC), et/ou
- dans une installation électronique de traitement de données d'un fournisseur de service.

9. Système de navigation pour un moyen de déplacement, en particulier un véhicule automobile, comprenant :
- au moins une unité d'enregistrement pour donner l'image d'un réseau de routes, notamment un réseau de rues, sous la forme de bordures directives (k) et de noeuds (p) situés entre ces bordures, et de résistances associées à chaque bordure (k) ou à chaque noeud (p),
- des moyens pour mémoriser des informations de trafic associées à au moins une bordure directive (k) et/ou au moins un noeud (p),
- au moins une unité de calcul pour mettre en oeuvre le procédé selon au moins une des revendications 1 à 7 et qui comprend
- des moyens pour définir une résistance de référence constituée par la somme des résistances entre une bordure de référence et le but, cette bordure étant celle qui fait suite dans la direction du but à la partie, concernée par l'information de trafic, de la route prédéfinie avant prise en compte de l'information de trafic,
- des moyens pour calculer la somme des résistances subsistant entre la position actuelle et le but,
- des moyens pour comparer cette somme à la résistance de référence,
- des moyens pour effacer l'information de trafic dans le cas où la somme est inférieure ou égale à la résistance de référence.

10. Système de navigation selon la revendication 9,
**caractérisé par**
au moins un dispositif indicateur ou au moins un écran pour représenter l'événement concernant lé trafic et/ou l'information de trafic associée à cet événement.
